# EUROPÄISCHE PATENTANMELDUNG

(11) **EP 0 903 833 A1**
(43) Veröffentlichungstag der Anmeldung: **24.03.1999**
(21) Anmeldenummer: 98116861.0
(22) Anmeldetag: 07.09.1998
(51) Int. Cl.: H02K 3/00

(54) **Elektrische Maschine mit Kurzschlussläufer**

(30) Priorität: 18.09.1997 DE 19741200
(71) Anmelder: SIEMENS AKTIENGESELLSCHAFT, 80333 München (DE)
(72) Erfinder: Link, Karl, Dipl.-Ing., 91790 Nennslingen (DE); Pittius, Ekkehard, Dr., 91154 Roth (DE)

(57) **Zusammenfassung**

Zur Reduzierung des Schalleistungspegels einer elektrischen Maschine mit Betriebs- oder Dämpferkäfig wird eine Abschirmung (14, 15; 14') des Ständers (10) im Bereich der über das Läuferblechpaket (3) überstehenden Läuferstabenden (4', 4'') vorgeschlagen.

## Beschreibung

Die Erfindung betrifft eine elektrische Maschine mit einem auf einer Läuferwelle angeordneten Läuferblechpaket, in dem Läuferstäbe angeordnet sind, welche an den an den Stirnseiten des Läuferblechpaketes überstehenden Läuferstabenden durch je einen Kurzschlußring elektrisch und mechanisch miteinander verbunden sind und mit einem durch einen zylindrischen Spalt vom Läuferblechpaket getrennten Ständerblechpaket, das mit Ständerspulen bestückt ist, die stirnseitig aus dem Ständerblechpaket ragende Ständerspulen-Wickelköpfe bilden.

Als elektrische Maschinen dieser Art kommen Synchronmaschinen mit Dämpferkäfig und Asynchronmaschinen mit Käfigläufer in Betracht. Eine Asynchronmaschine dieser Art ist aus der DE-40 14 116 A1 bekannt.

Aus der DE 195 25 704 C1 ist ein gekapselter Rotor für einen Asynchronmotor als Naßlaufmotor zum Antrieb einer Kreispumpe bekannt. Hierbei ist das Rotorblechpaket durch einen korrosionsfesten Schutzmantel gegenüber der Kühlflüssigkeit geschützt. Ferner ist aus der DE-40 03 155 A1 eine fremdbelüftete elektrische Maschine mit Klauenpolläufer bekannt, wobei zur Bildung von Luftleitkanälen Ringwände aus Kunststoff zwischen dem Ständerblechpaket und den Lagerschilden angeordnet sind. Schließlich ist es bei einem Kollektormotor für Hausgeräte zur Geräuschminderung aus der DE-87 12 026.7 U1 bekannt, das Läufer- und/oder Ständerblechpaket durch Umwickeln mit Kunststoffolie mit glatten Mantelflächen zu versehen.

Aus der DE-A-23 61 764 ist eine Asynchronmaschine mit Käfigläufer bekannt, wobei in Nuten des Läuferblechpaketes insbesondere aus Kupfer bestehende Läuferstäbe angeordnet sind, deren stirnseitig über das Läuferblechpaket überstehende Läuferstabenden durch je einen Kurzschlußring elektrisch und mechanisch miteinander verbunden sind. Auf der Läuferwelle ist das Läuferblechpaket zwischen Stützringen oder Endscheiben gehalten. Der Läufer rotiert im Abstand eines zylindrischen Spaltes in der Bohrung des Ständerblechpaketes des Ständers, wobei in Nuten des Ständerblechpaketes Ständerspulen angeordnet sind, die stirnseitig aus dem Ständerblechpaket ragende Ständerspulen-Wickelköpfe bilden.

Bei schnell laufenden Maschinen sind besonders die beidseits aus dem Läuferblechpaket ragenden Läuferstabenden und die mit ihnen verbundenen Kurzschlußringe stark beansprucht. Im Zusammenwirken mit den beidseits aus dem Ständerblechpaket ragenden Ständerspulen bzw. Ständerspulen-Wickelköpfen entstehen aufgrund der Rotation der Läuferstabenden gegenüber den Spulenschenkeln bzw. Wickelköpfen hohe störende Geräusche. Um diesen Nachteilen zu begegnen, hat man bereits versucht, den Abstand zwischen den Endscheiben des Läuferblechpaketes und den Kurzschlußringen klein zu halten. Dies führt jedoch zu einer Verschlechterung der Kühlung des Läufers. Gemäß der EP-0 749 198 A2 sind zur Dämpfung der Eigenschwingungen des Käfigläufers einer Asynchronmaschine beidseits des Läuferblechpaketes Distanzstege und vorzugsweise mit diesen einstückig ausgebildete Stützringe vorgesehen, derart, daß jeder Kurzschlußring in radialer Richtung durch einen auf der Läuferwelle festsitzenden Stützring abgestützt ist und der Kurzschlußring durch einen zugeordneten Schrumpfring, der den Kurzschlußring umgibt, auf den Stützring gepreßt wird. Auch ein relativ aufwendiger Kurzschlußläufer dieser Art arbeitet bei höheren Drehzahlen mit relativ starkem Laufgeräusch.

Aufgabe der Erfindung ist es, bei einer elektrischen Maschine der eingangs genannten Art den Schalleistungspegel zu reduzieren.

Diese Aufgabe wird erfindungsgemäß durch die im Patentanspruch 1 bzw. 4 angegebenen Merkmale gelöst. Der Vorteil der Erfindung ist insbesondere darin zu sehen, daß die Abschirmung die zur Geräuschbildung führenden Kanten oder Vorsprünge zwischen den rotierenden Läuferstabenden und den Spulenschenkeln bzw. Wickelköpfen des Ständerblechpaketes vermeidet und eine relativ glatte Oberfläche der Ständerköpfe im Bereich der aus dem Ständerblechpaket ragenden Spulenschenkel und Wickelköpfe bildet.

Eine vorteilhafte Ausgestaltung der Erfindung ist durch die Merkmale des Patentanspruches 2 gekennzeichnet. Eine weitere Ausführung der Erfindung besteht darin, daß die Ringe zylindrisch sind, die etwa in axialer Verlängerung der Ständerblechpaketbohrung zwischen Ständer und Läufer Strömungskanten an den Ständerspulen-Wickelköpfen vermeiden.

Nach einer anderen Ausführung der Erfindung ist vorgesehen, daß zwishen den Wickelköpfen der Ständerspulen über den Umfang des Ständers Einlagen, Überbrückungselemente, Füllstücke od.dgl. vorgesehen sind, die einen im wesentlichen zylindrisch bis kegelförmig verlaufenden, geschlossenen Wickelkopfdurchmesser bilden, in dem die Läuferstabenden und Kurzschlußringe des Läufers rotieren.

Ausführungsbeispiele der Erfindung sowie weitere damit verbundene Vorteile werden nachfolgend anhand der Zeichnung näher erläutert.

Es zeigen:
Figur 1 einen Axialhalbschnitt durch die Läufer-Ständer-Anordnung einer elektrischen Maschine gemäß der Erfindung,
Figur 2 einen Querschnitt nach II-II der Figur 1,
Figur 3 einen Querschnitt durch die Läufer-Ständer-Anordnung einer abgewandelten Ausführung der Erfindung.

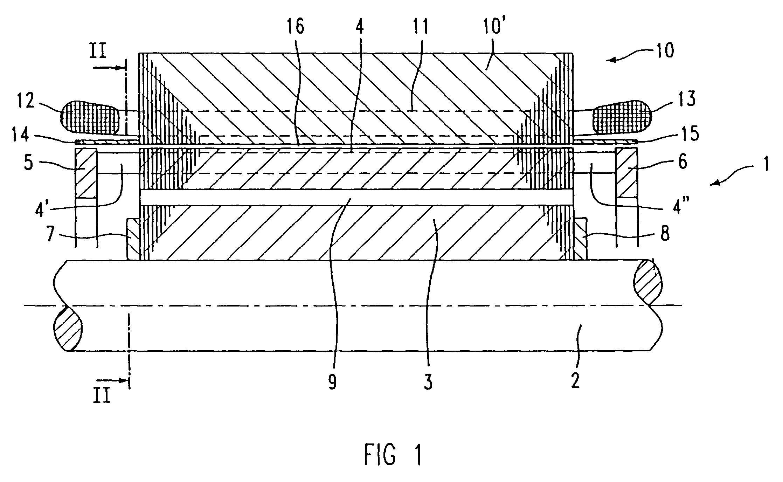

Bei dem Ausführungsbeispiel nach Figur 1 ist auf die Läuferwelle 2 des Läufers 1 einer elektrischen Maschine, beipielsweise einer Asynchronmaschine, ein Läuferblechpaket 3, bestehend aus Dynamoblechen, aufgepreßt, wobei beidseits des Läuferblechpaketes Stützringe 7, 8, Endscheiben oder Endplatten vorgesehen sind, welche mit der Läuferwelle fest verbunden, z.B. auf diese aufgeschrumpft sind. In der Ausbildung als Käfigläufer sind axial durch das Läuferblechpaket mehrere Läuferstäbe 4, insbesondere aus Kupfer, geführt, deren stirnseitig aus dem Läuferblechpaket ragende Läuferstabenden 4', 4'' elektrisch und mechanisch mit Kurzschlußringen 5, 6 verbunden sind. Zur Kühlung des Läufers 1 können z.B. mehrere axiale Kühlluftbohrungen 9 durch das Läuferblechpaket geführt sein.

Die elektrische Maschine umfaßt ferner einen unter Bildung eines zylindrischen Spaltes 16 um den Läufer 1 angeordneten Ständer 10. Der Ständer 10 besteht aus einem Ständerblechpaket 10', in dem mehrere Ständerspulen 11 angeordnet sind, wobei stirnseitig aus dem Ständerblechpaket Spulenschenkel mit den Ständerspulen-Wickelköpfen 12, 13 herausgeführt sind.

Zur Bildung einer geräuschmindernden glatten Oberfläche zwischen den Wickelköpfen 12, 13 des Ständers 10 und den rotierenden Läuferstabenden 4', 4'' und Kurzschlußringen 5, 6 des Läufers 1 ist erfindungsgemäß eine Abschirmung 14, 15 bzw. 14' vorgesehen.

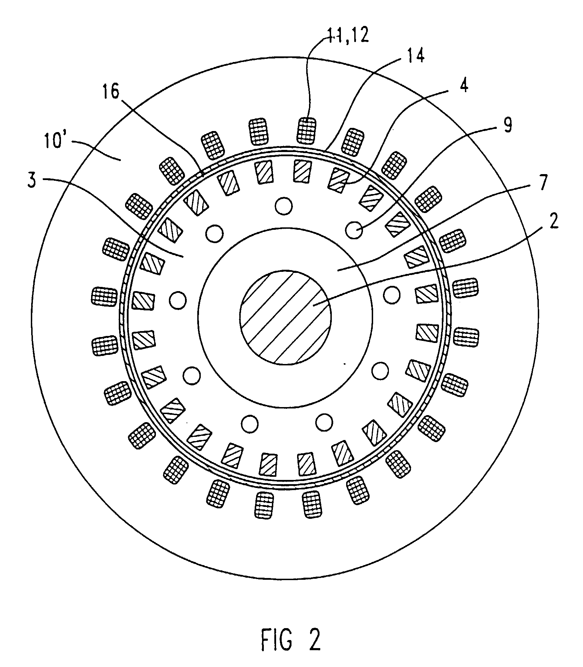

Bei der Ausführung nach den Figuren 1 und 2 wird die Abschirmung durch stirnseitig am Ständer 10 angeordnete Ringe 14, 15, Buchsen oder Hülsen gebildet, die vorzugsweise aus isolierendem Material bestehen. Dabei bildet die Abschirmung des Ständers zylindrisch bis kegelförmig verlaufende ringförmige Teile für einen geschlossenen Wickelkopfinnendurchmesser. Diese Ausbildung vermeidet geräuschbildende Kanten gegenüber den rotierenden Teilen 4', 4'', 5, 6 des Läufers 1.

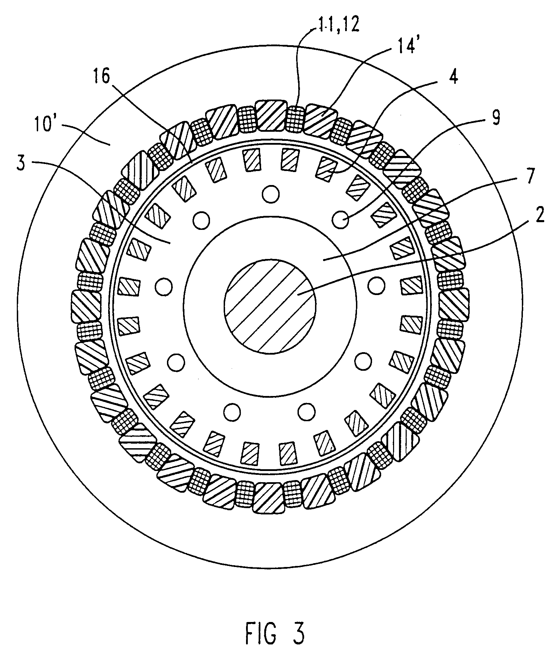

Gemäß dem Ausführungsbeispiel der Figur 3 bilden Einlagen 14', Überbrückungselemente oder Füllstücke zwischen den Spulenschenkeln bzw. Wickelköpfen 12, 13 des Ständerblechpaketes 10' die für eine glatte Oberfläche im Wickelkopfinnendurchmesser des Ständers 10 sorgende Abschirmung gegenüber den rotierenden Läuferteilen 4', 4'', 5, 6. Mittels der erfindungsgemäßen Abschirmung ist eine wesentliche Absenkung des Schalleistungspegels der elektrischen Maschine möglich.

## Patentansprüche

1. Elektrische Maschine mit einem auf einer Läuferwelle (2) angeordneten Läuferblechpaket (3), in dem Läuferstäbe (4) angeordnet sind, welche an den an den Stirnseiten des Läuferblechpaketes überstehenden Läuferstabenden (4', 4'') durch je einen Kurzschlußring (5, 6) elektrisch und mechanisch miteinander verbunden sind und mit einem durch einen zylindrischen Spalt (16) vom Läuferblechpaket getrennten Ständerblechpaket (10'), das mit Ständerspulen (11) bestückt ist, die stirnseitig aus dem Ständerblechpaket ragende Ständerspulen-Wickelköpfe (12, 13) bilden, **gekennzeichnet durch** an den Stirnseiten des Ständers (10) angeordnete ringförmige Abschirmungen zur Bildung einer glatten Oberfläche zwischen den Wickelköpfen (12, 13) des Ständers und den rotierenden Läuferstabenden (4', 4'') und Kurzschlußringen (5, 6) des Läufers (1). (FIG 1, 2)

2. Elektrische Maschine nach Anspruch 1, **dadurch gekennzeichnet,** daß die Abschirmungen aus Ringen (14, 15) bestehen, die in ihrem Innendurchmesser etwa dem Innendurchmesser des Ständerblechpakets (10') entsprechen.

3. Elektrische Maschine nach Anspruch 1, **dadurch gekennzeichnet,** daß die Ringe (14, 15) zylindrisch sind.

4. Elektrische Maschine mit den Merkmalen im Oberbegriff des Anspruches 1, **gekennzeichnet durch** zwischen den Ständerspulen (11) über den Umfang des Ständers (10) angeordnete Einlagen (14'), Überbrückungselemente oder Füllstücke, die zusammen mit den Wickelköpfen (12, 13) eine im wesentlichen zylindrisch bis kegelförmig verlaufende, geschlossene Wickelkopfinnenoberfläche bilden, in der die Läuferstabenden (4', 4'') und Kurzschlußringe (5, 6) des Läufers (1) rotieren. (FIG 3)

5. Elektrische Maschine nach einem der Ansprüche 1 bis 4, **dadurch gekennzeichnet,** daß die Ringe bzw. Einlagen (14, 15; 14') aus isolierendem Material bestehen.
